# EUROPEAN PATENT SPECIFICATION

(11) **EP 0 529 685 B1**
(45) Date of publication and mention of the grant of the patent: **27.12.1995**
(21) Application number: 92116800.1
(22) Date of filing: 28.06.1989
(51) Int. Cl.: C21D 9/60

(54) **Apparatus for heating a metallic elongated product**
Vorrichtung zum Erwärmen eines länglichen metallischen Gegenstandes
Dispositif pour chauffer un produit métallique allongé

(30) Priority: 28.06.1988 GB 8815371
(43) Date of publication of application: 03.03.1993
(62) Divisional of application: 89306576.3
(73) Proprietor: Beta Instrument Company Limited, High Wycombe Bucks. HP12 3SW (GB)
(72) Inventor: Kyriakis, John, Beta Instrument Company Limited, High Wycombe, Bucks. HP12 3SW (GB)
(74) Representative: Cline, Roger Ledlie

(56) References cited:
- EP-A- 0 083 291
- FR-A- 2 288 152
- GB-A- 2 124 660
- US-A- 4 117 295

## Description

Induction heating is often used for heating products. Elongated metallic products can be passed through an induction coil for heating.

GB-A-2117011 discloses a method for annealing non-ferrous strip material by passing the strip continuously around a pair of spaced pulleys ad effecting a short circuit between incoming ad outgoing strip material to form a closed electrical loop of strip material moving continuously around the pulleys. In that specification, the incoming ad outgoing strip material are in contact at one of the pulleys, being located in the same single groove of the pulley. A material is caused to traverse the loop by driving the material through friction from one of the pulleys. A series of rollers are arranged to feed the incoming strip material to said one pulley in a spiralling path so that the paths of said incoming and outgoing strip material on said one pulley are coplanar in overlapping relationship.

This method of applying drive to the strip in the pulley groove where electrical contact takes place is sometimes not satisfactory and the present invention has been devised to provide a improved arrangement which does not interfere with the closing of the electric circuit of the loop. The invention is set out in Claim 1.

An example of the invention will now be described with reference to the accompanying drawings in which:
Figure 1 is a diagram of apparatus for heating a metallic elongated product.
Figure 2 is a diametral section through a pulley in the apparatus of Figure 1.
Figure 3 is a equivalent circuit of the apparatus of Figure 1.

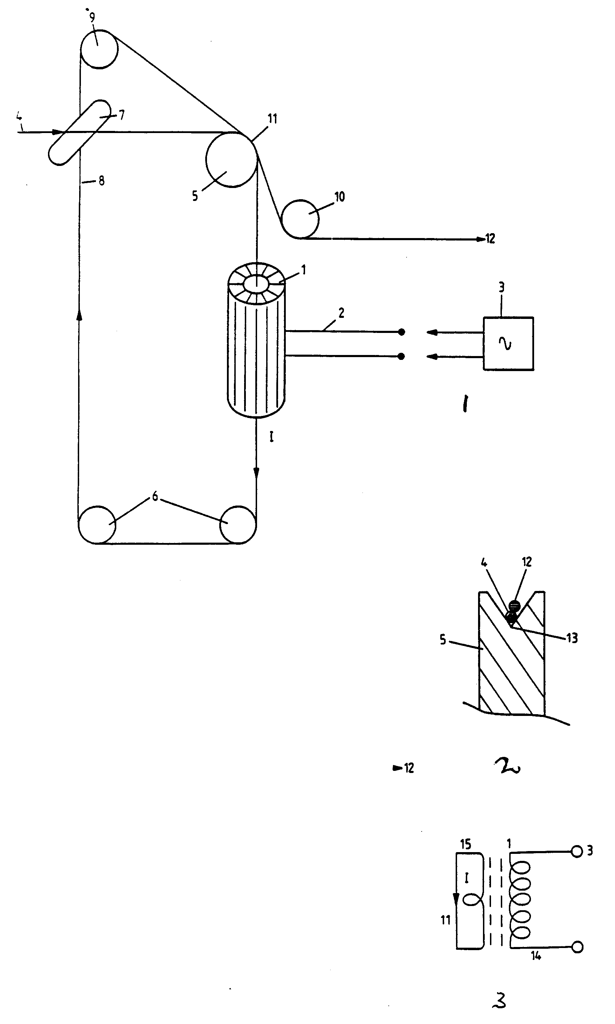

In the apparatus of Figures 1 to 3, an incoming wire strip 4 passes an insulating sliding bracket 7 and is turned through a right angle around an insulating pulley 5 to pass along the axis of an induction coil 1. The strip is then reversed by passing over two insulating pulleys 6 to pass on the other side of the bracket 7 and around a further insulating pulley 9 and re-enter the groove 13 of the pulley 5 to contact the incoming strip, passing thence around insulating deflecting pulley 10 to the output of the apparatus.

As can be seen in Figure 2, the insulating pulley 5 has a groove 13, at the base of which the incoming wire strip 4 is located and the outgoing wire strip 12 passing between the pulleys 9 and 10 is shown on top of and incontact with the incoming strip 4, thus completing the electrical contact between the incoming and outgoing strips 4 and 12 to complete the loop.

The induction coil is supplied with alternating power from a source 3 through a primary winding 2. The loop formed by the incoming and outgoing wire strips 4 and 12 between the pulleys (5, 6 and 9) form the secondary winding of the induction coil 1. The alternating voltage from source 3 induces a high current in the secondary loop to raise the wire temperature due to its inherent resistance and the temperature of the outgoing wire 12 is controlled by adjusting the voltage supplied by the source. The closing of the secondary windings is achieved simply by contact between the turns of the wire in the groove 13 and not through the pulleys, which are of insulating material for example a ceramic material such as glass.

The insulating sliding bracket is provided to keep the incoming wire strip 4 away from the strip passing from the second pulley 6 to the pulley 9, leaving the contact between the incoming and outgoing strips 4 and 12 to be made at the pulley 5.

## Claims

1. Apparatus for heating a length of a metallic elongated product, comprising:
a plurality of mutually insulated pulleys for forming a closed moveable loop from a portion of the length of said product, the loop being closed by different portions of the product in the same groove of one of said pulleys;
means arranged to prevent contact between a portion of said product forming said closed loop and a selected portion of said product disposed upstream or downstream of the clopsed loop; and
a transformer, a secondary winding whereof comprises said portion of said product forming said closed loop, characterised in that means arranged to prevent contact comprises an insulating spacing member located between said portion of said product forming said closed loop and said selected portion disposed upstream or downstream of the closed loop.

2. Apparatus as claimed in Claim 1 wherein the loop lies in a plane and the spacing member is arranged to maintain said upstream or downstream portion out of said plane.

## Patentansprüche

1. Vorrichtung zum Erwärmen einer Länge eines länglichen metallischen Gegenstandes, welche die folgenden Mittel aufweist:
mehrere gegenseitig isolierte Rillenscheiben zur Bildung einer geschlossenen beweglichen Schleife aus einem Abschnitt der Länge dieses Gegenstandes, wobei die Schleife durch verschiedene Abschnitte des Gegenstandes in derselben Rille von einer dieser Rillenscheiben geschlossen wird;
Mittel die eingerichtet sind, um den Kontakt zwischen einem Abschnitt des Gegenstandes, welcher die geschlossene Schleife bildet, und einem ausgewählten Abschnitt des Gegenstandes, welcher oberhalb oder unterhalb der geschlossenen Schleife gelegen ist, zu verhindern; und
einen Transformator, wovon eine sekundäre Wicklung den Abschnitt des Gegenstandes aufweist, welcher die geschlossene Schleife bildet, dadurch gekennzeichnet, daß die Mittel die eingerichtet sind, um den Kontakt zu verhindern, einen isolierenden Abstandhalter aufweisen, welcher zwischen dem Abschnitt des die geschlossene Schleife bildenden Gegenstandes sowie dem ausgewählten oberhalb oder unterhalb der geschlossenen Schleife gelegenen Abschnitt angeordnet ist.

2. Vorrichtung gemäß Anspruch 1, worin die Schleife in einer Ebene liegt und der Abstandhalter angebracht ist, um den oberen oder den unteren Abschnitt aus dieser Ebene heraus zu halten.

## Revendications

1. Appareil pour chauffer une longueur d'un produit métallique allongé. comprenant:
plusieurs poulies réciproquement isolées pour former une boucle fermée mobile à partir d'une partie de la longueur dudit produit, la boucle étant fermée par des parties différentes du produit dans la même cannelure de l'une desdites poulies;
des moyens aménagés pour éviter le contact entre une partie dudit produit formant ladite boucle fermée et une partie choisie dudit produit disposé en amont ou en aval de la boucle fermée; et
un transformateur, dont un enroulement secondaire comprend ladite partie dudit produit formant ladite bouche fermée, caractérisé en ce que des moyens arrangés pour empêcher le contact comprennent un membre d'espacement isolant situé entre ladite partie dudit produit formant ladite bouche fermée et ladite partie choisie disposée en amont ou en aval de la bouche fermée.

2. Appareil selon la revendication 1, dans lequel la bouche est située dans un plan et le membre d'espacement est arrangé de sorte à garder ladite partie en amont ou en aval en dehors dudit plan.
